# EUROPEAN PATENT SPECIFICATION

(11) **EP 1 698 232 B1**
(45) Date of publication and mention of the grant of the patent: **02.07.2008**
(21) Application number: 04807924.8
(22) Date of filing: 27.12.2004
(51) Int. Cl.: A23K 1/16, A23K 1/175, A23K 1/18

(54) **PET FOOD**
HOBBYTIERFUTTER
ALIMENT POUR ANIMAUX

(30) Priority: 26.12.2003 JP 2003433786
(43) Date of publication of application: 06.09.2006
(73) Proprietor: KAO CORPORATION, Tokyo 103-8210 (JP)
(72) Inventor: Umeda, Tomoshige, Kao Corp. Research Laboratories, Tokyo, 1318501 (JP); Otsuji, Kazuya, Kao Corp. Research Laboratories, Tokyo, 1318501 (JP)
(74) Representative: HOFFMANN EITLE
(86) International application number: PCT/JP2004/019569
(87) International publication number: WO 2005/063042

(56) References cited:
- EP-A- 1 216 623
- JP-A- 2002 138 297
- JP-A- 2003 160 794
- JP-A- 2003 250 463
- JP-A- 2003 306 692
- MURATA S. ET AL.: 'Shokubutsu abura ni fukumareru diacylglycerol no eiyo seiri k ino domyaku koka ni kakawaru kessei triglycerides ga teika.' KAGAKU TO SEIBUTSU. vol. 34, no. 4, April 1996, pages 219 - 221, XP002992155

## Description

### Field of the Invention

This invention relates to a pet food containing an oil or fat which contains unsaturated fatty acids.

### Background of the Invention

The number of domesticated animals is increasing due to the recent pet boom. With such a pet boom on the rise, there are a growing number of pets suffering from diseases equivalent to human adult diseases, such as obesity, diabetes and liver disease, which are caused by aging, insufficient exercise, overnutrition or the like. Furthermore, a great number of the dogs and cats grown as pets are becoming obese because of their hormonal imbalance occurring after undergoing contraceptive surgery.

To prevent such obesity or weight increase, numerous pet foods have been developed. Known examples include pet foods with a bay leaf extract as an amylase inhibitor (Patent Document 1), pet foods with a lipase inhibitor such as hesperidin (Patent Document 2), pet foods with Grifola frondosa powder and/or a Grifola frondosa extract (Patent Document 3), and pet foods with an oil or fat having a high unsaturated fatty acid content (Patent Document 4).

However, addition of an oil or fat having a high unsaturated fatty acid content to a pet food is so problematic that when stored over a long term, the oil or fat is prone to denature, develops an unpleasant smell, and further has impaired taste. Furthermore, the addition of minerals, such as copper, iron, manganese and cobalt, to an oil or fat having a high unsaturated fatty acid content as nutrients is known to accelerate the oxidation reaction of the oil or fat, so that the long-term storage stability of the minerals decline.
Patent Document 1: JP-A-05-192092
Patent Document 2: JP-A-09-187230
Patent Document 3: JP-A-08-038069
Patent Document 4: JP-A-06-217710

### Disclosure of the Invention

This invention provides a pet food containing the following ingredients (A), (B) and (C):
(A) from 5 to 50 wt% of an oil or fat, said oil or fat comprising 5 wt% or more of diacylglycerol, wherein the content of unsaturated fatty acids each having two or more double bonds therein in the constituent fatty acids of said oil or fat being 20 wt% or higher;
(B) from 0.001 to 1 wt% in total of copper, iron, manganese and cobalt as minerals; and
(C) 0.1 wt% or more of a vitamin C derivative based on ingredient (A).

### Modes for Carrying out the Invention

The present inventors have investigated the stability of pet food systems, each of which makes combined use of an oil or fat having a high unsaturated fatty acid content and minerals, by adding various ingredients. As a result, it has been found that the long-term storage stability improves pronouncedly when 5 wt% or more of diacylglycerol is contained in the oil or fat and from 0.1 wt% or more of a vitamin C derivative is added based on the oil or fat containing unsaturated fatty acids.

The pet food according to the present invention is excellent in long-term storage stability, and remains free of problems, such as the change in smell and the impairment of taste, even when stored over a long term. The pet food according to the present invention is excellent in having an anti-obesity effect, thanks to its high unsaturated fatty acid content and high diacylglycerol content.

The oil or fat used as ingredient (A) in the present invention is an oil or fat which contains 5 wt% or more of diacylglycerol. Further, the content of unsaturated fatty acids, each of which has two or more double bonds therein, in the constituent fatty acids of the oil or fat is 20 wt% or more. The content of diacylglycerol is 5 wt% or higher, preferably from 5 to 99 wt%, more preferably from 10 to 99 wt%, still more preferably from 15 to 99 wt%, even more preferably from 30 to 95 wt% from the standpoints of an unpleasant smell inhibiting effect, an anti-obesity effect and the solubility of the vitamin C derivative.

On the other hand, the content of unsaturated fatty acids, each of which has two or more double bonds therein, in the constituent fatty acids of the oil or fat is 20 wt% or more. From the standpoints of an anti-obesity effect and skin and hair health, however, the content of such unsaturated fatty acids may be preferably from 20 to 90 wt%, more preferably from 23 to 80 wt%, still more preferably from 25 to 70 wt%.

As the unsaturated fatty acids each having two or more double bonds, unsaturated fatty acids having from 18 to 24 carbon atoms, such as linoleic acid, linolenic acid, EPA, DHA and arachidonic acid, can be mentioned.

As fatty acids which constitute the oil or fat for use in the present invention, unsaturated fatty acids each containing one double bond and saturated fatty acids can be also mentioned in addition to the unsaturated fatty acids each containing two or more double bonds. As the unsaturated fatty acids each containing one double bond, unsaturated fatty acids having from 16 to 24 carbon atoms, such as oleic acid and palmitoleic acid can be mentioned. The saturated fatty acids can be fatty acids having from 10 to 24 carbon atoms. Further, the total content of saturated fatty acids in the oil or fat in the present invention may be preferably from 0 to 60 wt%, more preferably from 2 to 40 wt%, still more preferably from 2 to 20 wt%.

The constituent fatty acids of the diacylglycerol in the oil or fat for use in the present invention may preferably be similar to the constituent fatty acids of the whole oil or fat.

This diacylglycerol can be obtained, for example, (1) by subjecting an oil or fat, which is selected from oils or fats each containing in its constituent fatty acids 20 wt% or more of unsaturated fatty acids containing two or moredoublebonds (e.g., saffloweroil, olive oil, cottonseed oil, cornoil, rapeseedoil, soybeanoil, palmoil, sunflower oil, linseed oil, sesame oil; lard, beef tallow, fish oil, milk fat; and their fractionated oils, randomly esterified oils, hydrogenated oils, and transesterified oils), and glycerol to transesterification in the presence of the hydroxide of an alkali metal or alkaline earth metal or (2) by an esterification reaction of a fatty acid mixture, which is derived from such an oil or fat and contains 20 wt% or more of such unsaturated fatty acids, with glycerol. Upon obtaining the diacylglycerol, two or more oils or fats may be used in combination. These reactions can be conducted by chemical reactions making use of an alkali catalyst or the like as mentioned above. It is, however, preferred from the standpoints of oxidation stability and taste acceptability to conduct the reactions under milder conditions with an enzyme such as 1,3-selective lipase.

The content of free fatty acids in the oil or fat for use in the present invention may be preferably 20 wt% or lower, more preferably 10 wt% or lower, still more preferably 5 wt% or lower, even more preferably 2 wt% or lower, still even more preferably 1 wt% or lower in view of the tendency of release of an unpleasant smell from the oil or fat and its taste acceptability. As other components in the oil or fat, triglyceride (TG) can be mentioned. For example, an animal oil or fat or a plant oil or fat can be mentioned. Preferably, the constituent fatty acids of the triglyceride may also be similar to those described above.

The content of the oil or fat as ingredient (A) in the pet food is from 5 to 50 wt% from the standpoint of an anti-obesity effect and the elimination of any unpleasant smell from the pet food. However, its content can be preferably from 5 to 45 wt%, more preferably from 5 to 40 wt%, still more preferably from 10 to 30 wt%.

When copper, iron, manganese and cobalt are abundantly contained in a pet food, they act as catalysts to accelerate the oxidation of the oil or fat. The pet food according to the present invention, therefore, shows its advantageous effects when these ingredients are contained abundantly. They can be added, for example, as copper sulfate, iron sulfate, manganese oxide and cobalt carbonate. The content of the minerals as ingredient (B) in the pet food is from 0.001 to 1 wt%. However, their content is more preferably from 0.001 to 0.5 wt%, still more preferably from 0.005 to 0.1 wt%.
In addition to these minerals, the pet food according to the present invention may also contain other minerals such as calcium, phosphorus, sodium and potassium.

As a specific example of the vitamin C derivative as ingredient (C) in the pet food according to the present invention, ascorbic acid palmitate, ascorbic acid stearate or a mixture thereof is preferred for its good dissolution in the oil or fat. The vitamin C derivative is added as an antioxidant. It is, however, not known that a vitamin C derivative is useful for the improvement of long-term storage stability in a blended system of the particular oil or fat as ingredient (A) and the specific minerals as ingredient (B), especially in a system with ingredient (B), i.e., the minerals that catalyze the oxidation of an oil or fat. The vitamin C derivative as ingredient (C) is contained at 0.1 wt% or higher based on ingredient (A). However, its content can be preferably 0.5 wt% or higher, more preferably from 0.5 to 5 wt%, still more preferably from 0.5 to 1 wt%. From the standpoint of effectively inhibiting the oxidation of the oil or fat, it is preferred for the vitamin C derivative to exist in the oil or fat, and more preferably, to be dissolved in the oil or fat. With a conventional oil or fat composed of triacylglycerol as a primary component, the solubility of the vitamin C derivative as ingredient (C) is so low that its addition to a pet food at a high concentration is difficult. Bymaking the content of diacylglycerol high in an oil or fat as in ingredient (A), the solubility of the vitamin C derivative is rendered high in the oil or fat, thereby making it possible to add the vitamin C derivative at a high concentration in a pet food.

To the pet food according to the present invention, animal meat, plant sterol, plant proteins, cereals, brans, chaffs, sugars, vegetables, vitamins, etc. can be added in addition to the above-described ingredients. There can be mentioned: as plant proteins, soybean proteins; as cereals, wheat, barley, rye, milo, corn and the like; as brans, rice bran, wheat bran and the like; as chaffs, soybean chaff and the like. As animal proteins, beef, chicken, pork, fish and the like can be mentioned. Its content may be preferably from 0.2 to 60 wt%, more preferably from 1 to 30 wt%. The total amount of plant proteins, cereals, brans and chaffs may preferably amount to from 5 to 95 wt% of the pet food. As sugars, oligosaccharides, sugar, sucrose, molasses and the like can be mentioned. It is preferred to contain from 5 to 80 wt% of sugars. As vegetables, vegetable extracts and the like can be mentioned. It is preferred to contain from 1 to 30 wt% of vegetables. As vitamins, A, B₁, B₂, D, E, niacin, pantothenic acid, carotene and the like can be mentioned. It is preferred to contain from 0.05 to 10 wt% of vitamins. In addition to these ingredients, the pet food according to the present invention may also contain a gelling agent, a shape retainer, a pH adjuster, a seasoning, a preservative, a supplement and the like, all of which are commonly used in pet foods. For the purpose of inhibiting the oxidation of the oil or fat as ingredient (A) in the course of the production, it is preferred to conduct the production while purging with an inert gas such as nitrogen or performing deaeration. This manner of production is effective especially in a heating step.

### Examples

### Example 1

To a diacylglycerol-containing plant oil having the composition described in Table 1, the antioxidants shown in Table 3 were added, respectively, to provide blended oils W-Z, and in accordance with the formula shown in Table 2, pet foods were then produced. Shortly after the production and after being treated in an accelerated test, the oil analysis method which is described in 1.5-1996 of "The Standard Methods for the Analysis of Fats, Oils and Related Materials" established by The Japan Oil Chemists' Society, was followed to extract only an oil or fat from each pet food and then to measure its peroxide value (POV). The results are shown in Table 3.

**[Table 1]**

| Fatty acids | Composition (wt%) |
|---|---|
| C16:0 | 3.52 |
| C16:1 | 0.15 |
| C18:0 | 1.22 |
| C18:1 | 40.46 |
| C18:2 | 45.85 |
| C18:3 | 8.12 |
| C20:0 | 0.27 |
| C22:0 | 0.18 |
| C22:1 | 0.12 |
| C24:0 | 0.12 |
| C24:1 | 0.09 |

**[Table 2]**

| Feed materials for pet food | Amount added (wt%) |
|---|---|
| Corn | 27 |
| Rice flour | 23 |
| Chicken meal | 18 |
| Corn gluten | 14 |
| Blended oil | 7 |
| Beet pulp | 5 |
| Minerals¹⁾ | 3 |
| Vitamins | 2 |
| Chicken oil | 1 |

| | |
|---|---|
| 1) Total amount of copper, iron, manganese and cobalt in the minerals was 3 wt%. | |

### (POV Testing Method)

Each peroxide value (POV) was analyzed in accordance with 2.4.12.2-94 "Peroxide Value" of "The Standard Methods for the Analysis of Fats, Oils and Related Materials" established by The Japan Oil Chemists' Society. A POV smaller than 30 was assessed to be acceptable (accelerated testing method).
An open container was filled with each pet food , and then stored for 3 months in an air-conditioned chamber controlled at 40°C and 75% R.H. The POV of the oil or fat in the pet food after the storage was measured.

**[Table 3]**

| Blended oils | Blended oil W | Blended oil X | Blended oil Y | Blendedoil Z |
|---|---|---|---|---|
| Antioxidant²⁾ Ascorbic acid palmitate | | | 6,000 | |
| Tocopherol | 6,000 | | | |
| Rosemary extract | | 6,000 | | |
| Citric acid | | | | 6,000 |
| POV after production (meq/kg) | 2.25 | 2.15 | 2.30 | 2.20 |
| POV after accelerated test (meq/kg) | 130 | 100 | 25 | 140 |

| | | | | |
|---|---|---|---|---|
| 2) ppm based on oil | | | | |

As a result, it was found that as shown in Table 3, only the oil or fat in the pet food to which the blended oil Y with ascorbic acid palmitate contained therein was added had a POV smaller than 30 after the accelerated test and had a long-term storage stability improving effect.

## Claims

1. A pet food comprising the following ingredients (A), (B) and (C):
(A) from 5 to 50 wt% of an oil or fat, said oil or fat comprising 5 wt% or more of diacylglycerol, wherein the content of unsaturated fatty acids each having two or more double bonds therein in the constituent fatty acids of said oil or fat being 20 wt% or higher;
(B) from 0.001 to 1 wt% in total of copper, iron, manganese and cobalt as minerals; and
(C) 0.1 wt% or more of a vitamin C derivative based on said ingredient (A).

2. The pet food according to claim 1, wherein said pet food comprises 0.5 wt% or more of said ingredient (C) based on said ingredient (A).

## Patentansprüche

1. Tierfutter, umfassend die folgenden Bestandteile (A), (B) und (C):
(A) von 5 bis 50 Gew.-% eines Öls oder Fetts, wobei das Öl oder Fett 5 Gew.-% oder mehr Diacylglycerin umfasst, worin der Gehalt der ungesättigten Fettsäuren mit jeweils zwei oder mehr Doppelbindungen darin in den Bestandteilsfettsäuren des Öls oder Fetts 20 Gew.-% oder mehr ist;
(B) insgesamt von 0,001 bis 1 Gew.-% Kupfer, Eisen, Mangan und Cobalt als Mineralien; und
(C) 0,1 Gew.-% oder mehr eines Vitamin C-Derivates, bezogen auf den Bestandteil (A).

2. Tierfutter nach Anspruch 1, worin das Tierfutter 0,5 Gew.-% oder mehr des Bestandteils (C) enthält, bezogen auf den Bestandteil (A).

## Revendications

1. Aliment pour animaux comprenant les ingrédients (A), (B), et (C) suivants:
(A) de 5 à 50% en poids d'une huile ou graisse, ladite huile ou graisse comprenant 5% en poids ou plus de diacylglycérol, où la teneur en acides gras insaturés chacun possédant en lui deux ou davantage de liaisons doubles dans les acides gras constitutifs de ladite huile ou graisse étant de 20% en poids ou plus;
(B) de 0,001 à 1% en poids en tout de cuivre, fer, manganèse et cobalt en tant que minéraux; et
(C) 0, 1 % en poids ou plus d'un dérivé de vitamine C sur la base dudit ingrédient (A).

2. Aliment pour animaux selon la revendication 1, dans lequel ledit aliment pour animaux comprend 0,5% en poids ou plus dudit ingrédient (C) sur la base dudit ingrédient (A).
